# FASCICULE DE BREVET EUROPEEN

(11) **EP 0 505 221 B1**
(45) Date de publication et mention de la délivrance du brevet: **05.04.1995**
(21) Numéro de dépôt: 92400383.3
(22) Date de dépôt: 13.02.1992
(51) Int. Cl.: B60K 37/02

(54) **Perfectionnement aux combinés pour tableaux de bord de véhicules automobiles**
Verbessertes Anzeigendisplay für Amaturenbrett in Kraftfahrzeugen
Improved display-unit for dashboards in automotive vehicles

(30) Priorité: 15.02.1991 FR 9101831
(43) Date de publication de la demande: 23.09.1992
(73) Titulaire: JAEGER, F-92303 Levallois-Perret (FR)
(72) Inventeur: Guirauton, Pascal, F-95370 Montigny les Cormeilles (FR); Renner, Pierre, F-93800 Epinay/Seine (FR)
(74) Mandataire: Schrimpf, Robert

(56) Documents cités:
- EP-A- 0 064 865
- DE-A- 2 942 730
- GB-A- 1 552 551
- GB-A- 2 190 780

## Description

La présente invention concerne le domaine des combinés pour tableaux de bord pour véhicules automobiles.

On appelle généralement "combinés" pour tableaux de bord de véhicules automobiles, les ensembles regroupant les indicateurs principaux mis à la dispostion du conducteur.

On a déjà proposé de nombreux types de combinés.

Le document GB-A-2190780 décrit un panneau composite de combiné pour tableau de bord de véhicule automobile qui comprend une plaque en matière plastique pourvue d'un insert optiquement transparent comoulé avec la plaque et revêtue d'une membrane en polycarbonate sérigraphiée pour présenter différents symboles ou idéogrammes translucides, membrane dont la périphérie est recourbée pour recouvrir le bord de ladite plaque.

Le document GB-A-1552551 décrit un autre combiné pour tableau de bord de véhicule automobile, adapté pour permettre un remplacement aisé d'une source lumineuse intégrée à ce tableau en cas de déficience de cette source. A cet effet selon ce document le combiné comprend d'une part un élément formant boîtier comportant une paroi de base, des parois latérales et des toiles qui délimitent des compartiments formant boîtes à lumière, lesquels conmpartiments possèdent chacun une première ouverture revêtue d'une plaque translucide à idéogramme et une seconde ouverture latérale pour la réception d'une source lumineuse, d'autre part un élément de couverture.

On a également proposé des combinés comprenant :
- un boîtier qui loge par exemple un circuit imprimé, des sources lumineuses et des mouvements indicateurs,
- une pièce d'habillage qui entoure le boîtier, dénommé "réhaut",
- des voyants ou filtres pourvus de symboles placés en regard des lampes.

Dans ces combinés connus, le réhaut est une pièce d'habillage visible qui sert d'entretoise entre la vitre avant du combiné et la face avant du boîtier munie des voyants ou filtres précités.

La présente invention a maintenant pour but de perfectionner les combinés pour tableaux de bord connus, en améliorant leur esthétique, tout en permettant de réduire leur coût de fabrication.

Ce but est atteint selon la présente invention grâce à un combiné pour tableau de bord de véhicule automobile du type défini en revendication 1.

Le document GB-A-1552551 forme la base pour le préambule de la première revendication annexeé.

D'autres caractéristiques, buts et avantages de la présente invention apparaîtront à la lecture de la description détaillée qui va suivre et en regard des dessins annexés donnés à titre d'exemple non limitatif et sur lesquels :
- la figure 1 représente une vue schématique, partielle et en coupe, d'un combiné pour tableaux de bord de véhicules automobiles conforme à la présente invention,
- la figure 2 représente une vue avant du réhaut conforme à la présente invention, voyant enlevé, selon la vue schématisée par la flêche référencée A sur la figure 1, et
- la figure 3 représente une vue similaire du boîtier de combiné conforme à la présente invention, réhaut enlevé.

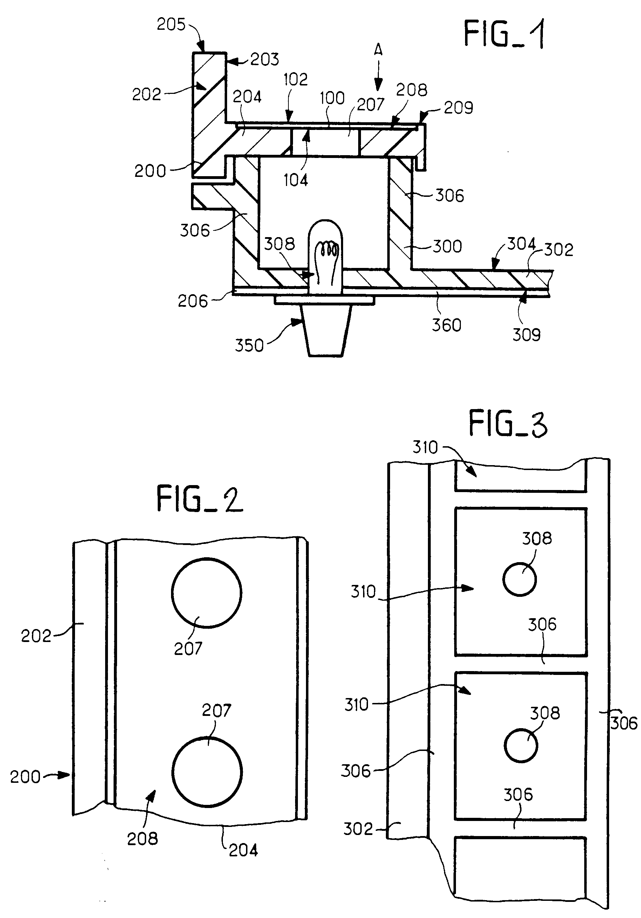

On aperçoit sur la figure 1, une vue partielle d'un combiné conforme à la présente invention comprenant au moins un filtre 100, une pièce d'habillage ou réhaut 200 et un boîtier 300.

Le boîtier 300 peut faire l'objet de nombreuses variantes de réalisation. De préférence, il est réalisé par moulage d'une pièce en matière plastique.

Pour l'essentiel, le boîtier 300 comprend une plaque de base généralement plane 302 pourvue sur sa face avant 304 d'une pluralité de toiles 306. Ces toiles 306 s'étendent sensiblement perpendiculairement à la face avant 304 de la plaque de base 302. Les toiles 306 peuvent être adaptées pour supporter tout accessoire approprié.

De préférence, les toiles 306 définissent entre autres, comme représenté sur la figure 3, une pluralité de cheminées 310 destinées chacune à recevoir une source lumineuse 350.

A cet effet, par exemple une plaque de base 302 est munie d'un perçage central 308 en regard de chaque cheminée 310.

Les lampes 350 peuvent être montées selon toutes techniques connues de l'homme de l'art, de préférence selon un montage du type à baîonnette.

De préférence, l'alimentation des lampes 350 est réalisée par l'intermédiaire d'un circuit imprimé 360 souple ou rigide, placé sur la face arrière 309 de la plaque de base 302, plus précisément entre cette face arrière 309 et le culot des lampes 350.

On notera à l'examen de la figure 3, que les cheminées 310 précitées recevant les lampes 350 sont formées par un ensemble de toiles 306 orthogonales entre elles.

Le circuit imprimé 360 peut être utilisé non seulement pour alimenter les lampes 350 servant de témoins indicateurs, mais également pour transmettre les signaux électriques de commande à des mouvements de type logomètre utilisés par exemple pour indiquer la vitesse de déplacement du véhicule ou servir de compte-tours.

La pièce d'habillage ou réhaut 200 peut également faire l'objet de nombreuses variantes de réalisation. Elle est de préférence réalisée par moulage d'une pièce en matière plastique.

De préférence, le réhaut 200 comprend une jupe périphérique 202 et un voile 204.

La jupe 202 s'étend perpendiculairement à la paroi de base 302. Son contour est défini en fonction de l'esthétique recherchée et de la place disponible au niveau du tableau de bord. Le voile 204 s'étend perpendiculairement à la jupe 202, sur la surface interne 203 de celle-ci.

Le voile 204 se raccorde de préférence sensiblement à mi-longueur de la jupe 202, ou le cas échéant à proximité de son bord avant 205, tout en étant de préférence formé en retrait de ce bord avant 205.

Comme cela apparaît à l'examen de la figure 1, la jupe 202 est conçue pour entourer les toiles 306, en étant généralement parallèles à certaines au moins de celles-ci, tandis que le voile 204 est conçu pour reposer contre le bord avant des toiles 306. Le voile 204 est ainsi sensiblement parallèle à la plaque de base 302. Le boîtier, et plus précisément la plaque de base 302, peut être fixé par tous moyens classiques appropriés, de préférence par des vis sur le réhaut 200, plus précisément sur la jupe 202, au niveau du bord arrière 206 de celle-ci.

Comme cela apparaît à l'examen des figures 1 et 2, le voile 204 est muni de différents perçages 207 centrés sur les cheminées 310 formées par les toiles 306 du boîtier. Ainsi, les perçages 207 sont placés respectivement en regard d'une lampe 350 formant témoin indicateur.

Le ou les filtres 100 conformes à la présente invention sont des films généralement de faible épaisseur de l'ordre de 0.1 à 1 mm sérigraphiés collés sur la face avant du voile 204 du réhaut. Plus précisément, de préférence, le ou les filtres 100 sont fixés dans un décrochement 208 formé sur la face avant du voile 204, de sorte que la face avant 102 de chaque filtre affleure la face avant 209 du voile 204.

Bien entendu, dans le cadre de la présente invention, il peut être prévu plusieurs filtres 100 séparés.

Le filtre 100 sérigraphié peut être formé par toute technique classique connue de l'homme de l'art.

A titre d'exemple non limitatif, le filtre 100 conforme à la présente invention peut être réalisé en procédant à deux dépôts successifs d'encre de sérigraphie sur un film de base. Le film de base peut être formé par exemple d'un film de polycarbonate translucide. L'un des dépôts de sérigraphie est de préférence un dépôt d'encre de couleur, tandis que l'autre dépôt effectué par sérigraphie est un dépôt d'encre de couche dépendant de l'aspect désiré opaque configuré selon les symboles recherchés.

La demanderesse a déterminé qu'il était important de prévoir une surface de liaison importante entre la face arrière 104 du filtre 100 et le fond du décrochement 208. En effet, les combinés pour tableaux de bord doivent accepter une plage de température ambiante importante, généralement -30°C à +80°C. Par ailleurs, et en fonction des lampes 350 allumées, les filtres 100 peuvent être soumis à des températures dépassant localement 110°C, cette température n'étant pas homogène sur toute la longueur du filtre 100. Il est par ailleurs important de noter que lorsque conformément à la présente invention, le filtre 100 est collé sur la face avant du réhaut 200, rien ne retient les déformations vers l'avant de ce filtre. Une mauvaise fixation du filtre sur le réhaut serait susceptible de créer des déformations ou effets de bulles locales tout à fait préjudiciables.

Sur ce point, l'utilisation d'une face d'appui formée par le fond du décrochement 208 présentant seulement des perçages localisés 207 de section réduite, s'est avérée très avantageuse.

Le filtre 100 peut être fixé sur le fond du décrochement 208 par tous moyens classiques appropriés. Il s'agit de préférence d'un collage. Ce collage peut être obtenu soit à l'aide d'une colle sérigraphiée, soit à l'aide d'une colle déposée par report. Dans les deux cas, pour éviter un débordement de colle lorsqu'une pression est appliquée sur le filtre 100, la zone d'application de colle sérigraphiée ou déposée par report est prévue en retrait des bords latéraux du filtre 100 et des perçages 207. Par ailleurs, de préférence on évite de placer de la colle en regard des symboles prévus sur le filtre.

Bien entendu la présente invention n'est pas limitée au mode de réalisation particulier qui vient d'être décrit mais s'étend à toutes variantes conformes aux revendications suivantes.

## Revendications

1. Combiné pour tableau de bord de véhicule automobile du type comprenant :
- un boîtier (300) qui loge des sources lumineuses (308),
- au moins un filtre (100) reçu dans un décrochement ayant une épaisseur sensiblement égale à la profondeur du décrochement et pourvu de symboles placé en regard des sources lumineuses (308),
- une pièce d'habillage (200) formant réhaut placée en avant du boîtier (300), où :
- le réhaut (200) comprend une jupe périphérique (202) et un voile (204) qui s'étend perpendiculairement à la jupe (202), sur la surface interne de celle-ci, le voile étant adapté pour reposer contre la face avant du boîtier (300),
- des perçages traversants (207) sont formés dans le voile (204), lesquels perçages (207) sont placés en regard d'une part, de symboles prévus sur le filtre (100), d'autre part en regard de sources lumineuses supportées par le boîtier (300)
caractérisé par le fait que :
- le voile s'étend en retrait du bord avant (205) de la jupe (202), dirigé vers le conducteur,
- le décrochement (208) est formé dans la face avant du voile (204) de réhaut (200),
- le filtre (100) est formé d'un film sérigraphié collé sur le fond du décrochement (208) formé dans la face avant du voile (204) de réhaut, la face avant du filtre (100) affleurant la face avant du voile (204) de réhaut.

2. Combiné selon la revendication 1, caractérisé par le fait que le boîtier (300) comprend essentiellement une plaque de base (302) munie sur sa face avant (304) d'une pluralité de toiles (306) qui forment des cheminées (310) logeant chacune une source lumineuse (350).

3. Combiné selon l'une des revendications 1 ou 2, caractérisé par le fait que chaque filtre (100) est réalisé à l'aide de dépôts d'encre sérigraphique sur un film translucide de base.

4. Combiné selon l'une des revendications 1 à 3, caractérisé par le fait que chaque filtre (100) est collé sur la face avant du réhaut à l'aide d'une colle sérigraphiée.

5. Combiné selon l'une des revendications 1 à 3, caractérisé par le fait que chaque filtre (100) est collé sur la face avant du réhaut (200) à l'aide d'une colle déposée par report.

## Claims

1. A display unit for a motor vehicle dashboard, the display unit being of the type comprising:
a housing (300) housing light sources (308);
at least one filter (100) received in a recess and of thickness substantially equal to the depth of the recess, the filter being provided with symbols placed in register with the light sources (308);
a piece of trim (200) forming a spacer placed in front of the housing (300), in which:
the spacer (200) comprises a peripheral skirt (202) and a mask (204) that extends perpendicularly to the skirt (202) from the inside surface thereof, the mask being adapted to rest against the front face of the housing (300);
through holes (207) are formed in the mask (204), which holes (207) are placed in register firstly with symbols provided on the filter (100) and secondly with light sources carried by the housing (300);
the display unit being characterized by the fact that:
the mask is set back from the front edge (205) of the skirt (202) which faces towards the driver;
the recess (208) is formed in the front face of the mask (204) of the spacer (200); and
the filter (100) is formed by a silk-screen printed film stuck to the bottom of the recess (208) formed in the front face of the mask (204) of the spacer, the front face of the filter (100) being flush with the front face of the mask (204) of the spacer.

2. A unit according to claim 1, characterized by the fact that the housing (300) essentially comprises a base plate (302) provided on its front face (304) with a plurality of webs (306) that form chimneys (310), each housing a light source (350).

3. A unit according to claim 1 or 2, characterized by the fact that each filter (100) is made by silk-screen printed deposits of ink on a translucent base film.

4. A unit according to any one of claims 1 to 3, characterized by the fact that each filter (100) is stuck to the front face of the spacer by means of a silk-screen printed adhesive.

5. A unit according to any one of claims 1 to 3, characterized by the fact that each filter (100) is stuck to the front face of the spacer (200) by means of adhesive that is deposited by transfer.

## Patentansprüche

1. Zusammengesetzte Instrumententafel für Kraftfahrzeuge, die folgendes enthält:
- ein Gehäuse (300), das die Lichtquellen (308) enthält,
- mindestens einen Filter (100), der in einer Fassung sitzt, dessen Dicke der Höhe dieser Fassung entspricht und der den Lichtquellen (308) gegenüber mit Symbolen versehen ist,
- ein Verkleidungsteil (200), das einen Aufsatz bildet und vor dem Gehäuse (300) angeordnet ist, wobei:
- der Aufsatz (200) einen Umfangsteil (202) besitzt und eine Abdeckung (204), die rechtwinklig zu diesem Umfangsteil verläuft, wobei diese Abdeckung so an der Innenseite des Umfangsteils angeordnet ist, daß sie auf der Vorderseite des Gehäuses (300) sitzt,
- die Abdeckung (204) mit Bohrungen (207) versehen ist, wobei diese Bohrungen (207) sowohl den auf dem Filter (100) vorgesehenen Symbolen als auch den im Gehäuse (300) enthaltenen Lichtquellen gegenüber angeordnet sind
dadurch gekennzeichnet, daß:
- die Abdeckung hinter der Vorderkante (205) des Umfangsteils (202) angeordnet ist, die dem Fahrer zugewandt ist,
- die Fassung (208) auf der Vorderseite der Abdeckung (204) des Aufsatzes (200) angeordnet ist,
- der Filter (100) aus einem Siebdruckfilm besteht, der auf den Boden der auf der Vorderseite der Abdeckung (204) des Aufsatzes geformten Fassung (208) geklebt ist, wobei die Vorderseite des Filters (100) mit der Vorderseite der Abdeckung (204) des Aufsatzes auf einer Höhe liegt.

2. Instrumententafel nach Anspruch 1, dadurch gekennzeichnet, daß das Gehäuse (300) hauptsächlich aus einer Grundplatte (302) besteht, die auf ihrer Vorderseite (304) mehrere Bleche (306) enthält, die Kammern (310) mit jeweils einer Lichtquelle (350) bilden.

3. Instrumententafel nach Anspruch 1 oder 2, dadurch gekennzeichnet, daß jeder Filter (100) durch den Auftrag von Siebdruckfarbe auf einen lichtdurchlässigen Film hergestellt wird.

4. Instrumententafel nach einem der Ansprüche 1 bis 3, dadurch gekennzeichnet, daß jeder Filter (100) mit Hilfe eines Siebdruckklebers auf die Vorderseite des Aufsatzes geklebt wird.

5. Instrumententafel nach einem der Ansprüche 1 bis 3, dadurch gekennzeichnet, daß jeder Filter (100) mit Hilfe eines durch Übertrag aufgetragenen Klebers auf die Vorderseite des Aufsatzes (200) geklebt wird.
